Europäisches Patentamt

European Patent Office

Office européen des brevets

(19)

(11) Veröffentlichungsnummer: **0 126 298**
**A1**

(12) ## EUROPÄISCHE PATENTANMELDUNG

(21) Anmeldenummer: **84104350.8**

(22) Anmeldetag: **17.04.84**

(51) Int. Cl.³: **C 09 K 3/14**

(30) Priorität: **23.04.83 DE 3314789**

(43) Veröffentlichungstag der Anmeldung: **28.11.84**
**Patentblatt 84/48**

(84) Benannte Vertragsstaaten: **BE CH DE FR GB IT LI NL**

(71) Anmelder: **BASF Aktiengesellschaft,
Carl-Bosch-Strasse 38, D-6700 Ludwigshafen (DE)**

(72) Erfinder: **Schwen, Roland, Dr., Im Schlossgarten 7,
D-6701 Friedelsheim (DE)**

(54) **Schleif-, Läpp- und Polierpasten.**

(57) Schleif-, Läpp- und Polierpasten mit einem Gehalt an abrasivem Material, einem Verdicker und einem wasserlöslichen Alkylenoxidpolymeren. Die Pasten haben neben guten anwendungstechnischen Eigenschaften den Vorteil der Reinigung der Werkstücke mit Wasser.

EP 0 126 298 A1

BASF Aktiengesellschaft                                    O.Z. 0050/36486
                                                        0126298

## Schleif-, Läpp- und Polierpasten

Die Erfindung betrifft Schleif-, Läpp- und Polierpasten, deren Reste mit
Wasser vom Werkstück entfernt werden können und deren Träger gute Schmiereigenschaften aufweisen.

Bei der Nachbearbeitung der spanabhebenden Fertigung werden oftmals abrasive Mittel eingesetzt. Neben der Bearbeitung von Metallen und anderen
Werkstoffen mit fest gebundenen Schleifmitteln (Abziehsteine, Schleifscheiben, Trennscheiben, Schmirgelleinen und -papieren) sind auch lose
Schleifmittel üblich:

Sie werden entweder mit Flüssigkeiten oder mit Fetten vermischt auf das
Werkstück aufgetragen; in relativer Bewegung zu einer Gegenfläche erfolgt
der gewünschte Materialabtrag. Die Gegenfläche kann ein anderes Teil des
Werkstücks selbst darstellen oder eine besondere Werkzeugoberfläche sein
(von Läppscheiben bis zum Lammfell).

Dabei macht die Entfernung von Resten der Schleifpasten auf Öl- oder Fettbasis von dem behandelten Werkstück häufig Schwierigkeiten, insbesondere
wenn das Werkstück Vertiefungen aufweist. Das Werkstück muß dann zur Entfernung von Pasten-Rückständen mit Waschbenzin behandelt werden. Abgesehen von der Gefahr der Handhabung dieses Lösungsmittels besteht die
Gefahr, daß einzelne Schleifkörner auf dem Werkstück zurückbleiben bzw.
aus der nicht kontinuierlich erneuerten Benzinwäsche wieder auf das Werkstück gelangen.

Es ist deshalb schon vorgeschlagen worden das Werkstück mit einem wasserlöslichen filmbildenden oder viskosen Stoff zu überziehen, um nach Beendigung des Schleif- oder Poliervorgangs das Werkstück mit Wasser reinigen
zu können. Diese Arbeitsweise hat aber den Nachteil, daß zwei Arbeitsgänge erforderlich sind.

Ferner sind Schleifpasten mit Wasser oder wäßrigen Emulsionen bekannt.
Diese Pasten haben jedoch häufig den anwendungstechnischen Nachteil, daß
diese Träger kein ausreichendes Schmierverhalten haben und dadurch grobe
Kratzer entstehen können.

Es bestand daher die Aufgabe, Schleif-, Läpp- oder Polierpasten zu finden, die weder die Nachteile des Abwaschens mit Waschbenzin haben, noch
eine zweistufige Arbeitsweise erfordern und deren Träger gute Schmiereigenschaften aufweist.

Hp/ro

Diese Aufgabe wurde erfindungsgemäß mit Schleif-, Läpp- und Polierpasten gelöst, die

a)   ein feinverteiltes abrasives Material
b)   einen Verdicker und
c)   als Pastenbasis ein wasserlösliches Alkylenoxidpolymer enthalten.

Als abrasive Materialien seien beispielhaft Wiener Kalk, Eisenoxidrot, Diatomeenerde, Bimsmehl, Quarzsand, Chromtrioxid, Korund, Siliziumcarbid, Borcarbid, Bornitrid und Diamantpulver genannt, wobei die Teilchengrößen den in der Schleiftechnik üblichen Bereich zwischen ca. 1 und 1200 µm betragen. Vorzugsweise werden die handelsüblichen, eng abgestuften Korngrößenklassen gemäß DIN 848 und DIN 69101 eingesetzt.

Als Verdicker kommen vor allem anorganische Stoffe mit großer innerer Oberfläche und Teilchengrößen von weniger als 50 nm (Nanometer) in Betracht. Bevorzugt ist feinverteilte Kieselsäure, insbesondere durch Pyrolyse von Siliziumtetrachlorid erhaltene Kieselsäure, die z.B. als (R)Aerosil im Handel ist.

Als Alkylenoxidpolymere kommen wasserlösliche Polyglykole des Ethylenoxids, Propylenoxids oder Butylenoxids oder deren Monoalkylether mit niedermolekularen Alkoholen in Betracht. Die Polymere sollen zweckmäßig eine Viskosität von 22 bis 1500 mm/s bei 40°C aufweisen. Dementsprechend haben die Polymere ein Molekulargewicht von 500 bis 25000, vorzugsweise 2000 bis 4000. Besonders bevorzugt sind die (statistischen) Anlagerungsprodukte von Ethylenoxid und Propylenoxid an Butanol, wobei die Anlagerung bei 40°C bis zu einer Viskosität von z.B. 320 $mm^2$/s durchgeführt wird.

Die Schleif-, Läpp- und Polierpasten enthalten in der Regel 10 bis 70, vorzugsweise 20 bis 50 Gew.% an abrasivem Material, bezogen auf die Pasten.

Der Verdickergehalt beträgt zweckmäßig 5 bis 15, vorzugsweise 5 bis 10 Gew.%, bezogen auf die Paste.

Der Rest der Pasten besteht aus dem Alkylenoxid-Polymeren, wobei noch weitere an sich bekannte Zusätze wie Farbstoffe in den Pasten enthalten sein können.

Insbesondere können die Pasten je nach Anwendungszweck zur Einstellung der Viskosität noch Wasser enthalten.

Die erfindungsgemäßen Pasten zeichnen sich durch vielfache anwendungstechnische Vorteile aus. Die Schleif-, Läpp- und Polierpasten können nach dem Arbeitsgang mit Wasser abgewaschen werden. Dadurch entfällt das gefährliche und nachteilige Arbeiten mit Waschbenzin.

Sie zeigen besseres Schmierverhalten durch Verwendung der Glykoletheröle. Dieses Schmierverhalten ist sehr wichtig, um eine gewünscht gleichmäßige Rauhtiefe zu erhalten und an keiner Stelle und zu keiner Zeit Trockenlauf zu bekommen. Hier würde sich die Reibung zwischen dem Werkstück, dem abrasiven Pulver und der Werkstück-Gegenseite derart erhöhen, daß sich größere Materialteilchen aus einer der beiden Oberflächen lösen würden, die zu groben Kratzern führen würden. Dieses mangelhafte Schmierverhalten ist in der Fertigung sehr gefürchtet: deshalb wird die Schleifzeit mit handelsüblichen Pasten beschränkt und die Paste unter großem Zeitaufwand öfters erneuert, obwohl die eigentliche abrasive Komponente noch nicht verbraucht und der gewünschte Grad der Bearbeitung noch nicht erreicht ist. Diese genannten Nachteile werden durch die erfindungsgemäßen abrasiven Pasten vermieden.

Beispiele:

1.    15 Teile eines Adduktes erhalten durch Einarbeitung einer Mischung von 55 Gew.% Ethylenoxid und 45 Gew.% Propylenoxid an n-Butanol bis zu einer Viskosität von 220 $mm^2$/s bei 40°C, ein Teil [R]Aerosil 200 (Degussa) ergeben ein glasklares, wasserlösliches, sehr gut schmierendes Fett, dem 4 Teile Siliziumcarbid, Körnung 100 (DIN 69101) zugesetzt werden.

2.    Man verfährt wie in Beispiel 1, verwendet aber 4 Teile Siliziumcarbid Körnung 600.

In der folgenden Tabelle werden weitere Pasten mit dem gleichen Träger beschrieben.

Tabelle

| Beispiel | Träger | Verdicker | abrasives Material |
|----------|--------|-----------|--------------------|
| 3 | wie Beispiel 1 100 Teile | Aerosil 200 7 Teile | Siliziumcarbid, Körnung 150 27 Teile |
| 4 | " | " | Siliziumcarbid, Körnung 50 107 Teile |
| 5 | " | " | Borcarbid, Körnung 1200 46 Teile |
| 6 | " | " | Chromoxidgrün |
|   |   | 6 Teile | 19 Teile |
| 7 | " | 7 Teile | 107 Teile Bimsmehl |

Alle Pasten wurden in einem Arbeitsgang bei Raumtemperatur mit einem geeigneten, langsam laufenden Rührwerk hergestellt.

## Patentansprüche

1. Schleif-, Läpp- und Polierpasten, enthaltend

   a) ein feinverteiltes abrasives Material,
   b) einen Verdicker und
   c) als Pastenbasis ein wasserlösliches Alkylenoxid-Polymer.

2. Schleif-, Läpp- und Polierpasten gemäß Anspruch 1, dadurch gekennzeichnet, daß sie als Verdicker (b) feinverteilte Kieselsäure und als Pastenbasis

   (c) ein polymeres Glykol des Ethylenoxids, Propylenoxids und/oder Butylenoxids oder dessen Monoether mit einem niedrigmolekularen Alkohol enthalten.

3. Schleif-, Läpp- und Polierpasten gemäß Anspruch 1, dadurch gekennzeichnet, daß sie als Pastenbasis (c) einen Polyglykolmonoalkylether des Ethylenoxids und/ oder Propylenoxids mit einem Molekulargewicht von 500 bis 25000 enthalten.

4. Schleif-, Läpp- und Polierpasten gemäß Anspruch 1, dadurch gekennzeichnet, daß sie
   10 bis 70 Gew.% des abrasiven Materials
    5 bis 15 Gew.% des Verdickers
   und
   15 bis 85 Gew.% des Polyalkylenoxids, alle Gewichtsprozente bezogen auf die Paste, enthalten.

**Europäisches Patentamt**

**EUROPÄISCHER RECHERCHENBERICHT**

0126298

Nummer der Anmeldung

EP 84 10 4350

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 021 263 (MARC ROSENBLUM) * Zusammenfassung; Spalte 2, Zeilen 40-48; Spalte 3, Beispiel II * | 1,2 | C 09 K 3/14 |
| | --- | | |
| A | US-A-2 649 362 (CHESTER C. FOWLER) | | |
| | --- | | |
| A | DE-A-2 617 296 (INSTITUT PROBLEM MATERIALOVEDENJA) | | |
| | ----- | | |

**RECHERCHIERTE SACHGEBIETE (Int. Cl. ³)**

C 09 K
C 09 G

Der vorliegende Recherchenbericht wurde für alle Patentansprüche erstellt.

| Recherchenort | Abschlußdatum der Recherche | Prüfer |
|---|---|---|
| DEN HAAG | 07-08-1984 | GIRARD Y.A. |